# EUROPÄISCHE PATENTSCHRIFT

(11) **EP 1 245 878 B1**
(45) Veröffentlichungstag und Bekanntmachung des Hinweises auf die Patenterteilung: **05.09.2007**
(21) Anmeldenummer: 01121895.5
(22) Anmeldetag: 12.09.2001
(51) Int. Cl.: F16K 1/22, F16K 1/226

(54) **Klappenventil**
Butterfly valve
Soupape à papillon

(30) Priorität: 27.03.2001 DE 20105380 U
(43) Veröffentlichungstag der Anmeldung: 02.10.2002
(73) Patentinhaber: APV ROSISTA GMBH, 59425 Unna (DE)
(72) Erfinder: Plümper, Karl-Josef, 58730 Fröndenberg (DE)

(56) Entgegenhaltungen:
- EP-A- 0 292 659
- EP-A- 0 348 101
- DE-A- 2 632 289
- DE-A- 3 811 937
- DE-B- 1 031 504
- GB-A- 1 220 141
- US-A- 3 425 439
- US-A- 4 659 064

## Beschreibung

Die Neuerung bezieht sich auf ein Scheibenventil mit einer drehbaren Klappenscheibe, die mit einer beidseitigen Schaltwelle oder einem Klappenschaft formschlüssig im Verbund steht und deren Führung im Bereich der Lagerbuchsen des Gehäuses erfolgt.

Ein derartiges Scheibenventil ist beispielsweise aus der DE 2 027 775 bekannt. Bei diesem Scheibenventil weist die Klappenscheibe an gegenüberliegenden Seiten angeordnete Drehzapfen auf, die in Lagerbohrungen des Scheibenventils eingreifen. Zur Abdichtung nach außen sind hierbei Ausdehnungs- oder Druckringe vorgesehen, welche die Drehzapfen an der Eintrittstelle in das Ventilgehäuse dichtend umgeben. Sobald sich in diesem Bereich der Drehzapfen Undichtigkeiten ergeben, kann das Medium zwischen Dichtungselement und den Lagebuchsen des Gehäuses entweichen.

Bei ähnlich ausgebildeten Abdichtungen, wobei die Abdichtung zur Klappenscheibe weist und diese mit der Schaltwelle bzw. dem Klappenschaft in einer Lagerbuchse aus Kunststoff gelagert ist, werden Undichtigkeiten im Wesentlichen vermieden.

Bei diesen Scheibenventilen wirkt insbesondere im geschlossenen Ventilzustand der in der medienführenden Leitung anstehende Mediendruck einseitig auf die Mantelfläche der Klappenscheibe. Dieser auflastende Druck preßt die Klappenscheibe mit ihrem Drehzapfen in die Schaftlager und diese entsprechend einseitig in die Gehäusehälfte, was im Laufe der Zeit zu einer Durchbiegung der Klappenscheibe und damit zu einem Kippen der Klappenschäfte in den Schaftlagern führt. Auf diese Weise wirkt neben der radialen Kraftkomponente auch eine axiale Kraftkomponente auf die eigentlichen Lagerbuchsen, die praktisch aus den Lagerbohrungen nach außen gedrängt werden.

Normalerweise werden die Lagerbuchsen zwischen den Gehäusehälften mit einer gewissen Vorspannung eingebaut, um ein Herauswandern zu verhindern. Durch die verschiedenen Wärmeausdehnungskoeffizienten der polymeren Lagerbuchsen und dem Edelstahl der Gehäusehälften und der Klappenschäfte geht diese Vorspannung jedoch im praktischen Betrieb durch ein Setzen der Lagebuchsen verloren. Im Ergebnis werden die Lagerbuchsen lose und wandern aus den Gehäusehälften nach außen heraus.

Die US-A 3 425 439 offenbart ein Scheibenventil mit einer drehbaren Klappenscheibe, deren Schäfte mit einer umlaufenden Erhöhung ausgebildet sind. Diese Erhöhung greift in eine den Klappenraum und auch die Lagerstelle auskleidende Haut aus elastischem PTFE-Material ein, welches zusätzlich im Bereich der Erhöhung mit einer Gummierung hinerlegt und abgefedert ist. Dabei dient die Erhöhung ausschließlich zur Abdichtung dieses Bereiches.

Ferner ist aus der DE 26 32 289 ein Zapfen einer Klappenscheibe bekannt, welche durch eine an seinem Umfang angebracht Nut mit einem O-Ring abgedichtet in einer Lagerbuchse gelagert ist. Die eigentliche Befestigung erfolgt hierbei mittels eines Sprengringes und einer zusätzlichen Gewindeschraube unterhalb der eigentlichen Lagerbuchse.

Um diese Nachteile des Auswanderns zu verhindern, werden die nach außen weisenden Lagerbohrungsenden in einem zusätzlichen Arbeitsgang beispielsweise durch Anstauchen im Endbereich oder durch den Lagerbohrungsdurchmesser einengende Körnerschläge behandelt. Als nachteilig ist hierbei der unmittelbare Eingriff in das Material sowie der zusätzliche Behandlungsaufwand anzusehen.

Aufgabe der vorliegenden Neuerung ist es, diese Nachteile bei Scheibenventilen der eingangs genannten Art zu beseitigen und einen einwandfreien Halt der einander zugeordneten Lagerteile zu gewährleisten.

Diese Aufgabe wird gemäß der Erfindung bei einem Scheibenventil der eingangs genannten Art dadurch gelöst, dass eine Schaftdichtung im Gehäuse angeordnet ist, durch die ein Schaltwellenende der beidseitigen Schaltwelle oder der Klappenschaft hindurchgeht, die zur Klappenscheibe hinweist und die das Gehäuse nach außen hin abdichtet, und dass die Lagerbuchse in direktem Anschluß an die Schaftdichtug in einer Lagerbohrung des Gehäuses gelagert ist und das eine Schaltwellenende oder den Klappenschaft aufnimmt und dass das Schaltwellenende oder der Klappenschaft bzw. die zugehörige Lagerbuchse mit einer mindestens teilweise umlaufenden Erhöhung ausgebildet ist, die in eine entsprechende Vertiefung des zugeordneten Mantels des anderen Teils eingreift.

Dabei hat es sich in selbständiger Ausbildung der Erfindung als vorteilhaft herausgestellt, dass die Erhöhung des mindestens einen Endes der beidseitigen Schaltwelle oder des Klappenschafts größer als der Lagerdurchmesser der Lagerbuchse ist und in den Mantel der Lagerbuchse eingreift.

Ferner ist im Rahmen der Erfindung vorgesehen, dass die zugehörige Lagerbuchse die Erhöhung aufweist, die in den Mantel des mindestens einen Endes der beidseitigen Schaltwelle oder des Klappenschaftes eingreift.

Weitere Merkmale der Neuerung ergehen aus den Unteransprüchen.

Mit der neuerungsgemäßen Ausgestaltung werden die vorgeschilderten Probleme und Nachteile, wie sie sich aus dem Stand der Technik ergeben, ausgeschaltet. Mit der vorgeschlagenen Ausbildung werden die Lagerbuchsen auch unter der vorbeschriebenen Belastung ortsfest in ihrer Position gehalten, ohne dass materialbeeinflussende Maßnahmen erforderlich werden.

Im Nachfolgenden wird die Neuerung anhand eines in der Zeichnung dargestellten Ausführungsbeispiels näher erläutert. In der Zeichnung zeigt:
- Fig. 1: ein Scheibenventil teilweise im Querschnitt und
- Fig. 2: eine vergrößerte Darstellung der neuerungsgemäßen Ausbildung.

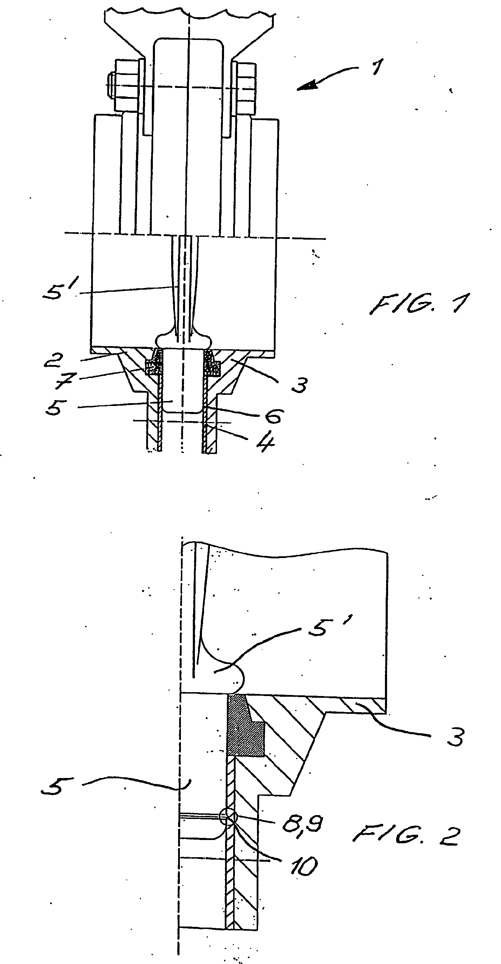

Gemäß dem in Fig. 1 der Zeichnung dargestellten Ausführungsbeispiel besteht das Scheibenventil aus dem eigentlichen Gehäuse 1 mit den Gehäusehälften 2 und 3, in denen die Lagerbohrungen 4 für die Schaltwellenenden bzw. Klappenschäfte 5 der Klappenscheibe 5' ausgebildet sind. Die Lagerbohrungen 4 nehmen die eigentliche Lagerbuchse 6 auf. In der Zeichnungsebene ist oberhalb dieser Lagerbuchse 6 eine das Gehäuse 1 nach außen abdichtende Schaftdichtung 7 angeordnet.

Gemäß dem in Figur 2 dargestellten vergrößerten Ausführungsbeispiel weist das Schaltwellenende bzw. der Klappenschaft 5 eine vorzugsweise umlaufende Erhöhung 8 auf, die in dem zugeordneten Mantel 9 der Lagerbuchse 6 bzw. eine entsprechende Vertiefung 10 eingreift und die Wanderung der Lagerbuchse 6 auch bei der vorgeschilderten hohen axialen Belastung ausschließt. Anstelle dieser Ausbildung ist auch eine umgekehrte Ausbildung, also eine Erhöhung 8 auf den zylindrischen Mantel 9 der Lagerbuchse 6 und eine entsprechende Ausnehmung, Nute oder Vertiefung 10 auf der Mantelfläche des oder der Klappenschäfte 5 denkbar. Beide zusammenwirkenden Ausbildungen 8, 10 können anstelle umlaufend auch nur teilweise oder in mehreren Reihen nebeneinander vorhanden sein. Diese können auch als Rasterhöhungen und -Vertiefungen ausgebildet auf den betreffenden Oberflächen angeordnet sein. Zweckmäßig drückt sich die Erhöhung 8 der Klappenschäfte 8 bei der Montage des Scheibenventils entsprechend in die Lagerbuchse 6, die aus Kunststoff sein kann, ein, womit ein sicherer Halt gewährleistet ist.

## Patentansprüche

1. Scheibenventil mit einer in einem Gehäuse (1) drehbaren Klappenscheibe(5'), die mit einer beidseitigen Schaltwelle oder einem Klappenschaft formschlüssig im Verbund steht und deren Führung im Bereich einer zugehörigen Lagerbuchse (6) des Gehäuses erfolgt, **dadurch gekennzeichnet, dass** eine Schaftdichtung (7) im Gehäuse angeordnet ist, durch die ein Schaltwellenende der beidseitigen Schaltwelle oder der Klappenschaft hindurchgeht, die zur Klappenscheibe hinweist und die das Gehäuse (1) nach außen hin abdichtet, dass die Lagerbuchse (6) in direktem Anschluß an die Schaftdichtung in einer Lagerbohrung (4) des Gehäuses (1) gelagert ist und das eine Schaltwellenende oder den Klappenschaft aufnimmt, und dass das eine Schaltwellenende oder der Klappenschaft (5) bzw. die zugehörige Lagerbuchse (6) mit einer mindestens teilweise umlaufenden Erhöhung (8) ausgebildet ist, die in eine entsprechende Vertiefung (10) des zugeordneten Mantels des anderen Teils eingreift.

2. Scheibenventil nach Anspruch 1, **dadurch gekennzeichnet, dass** die Erhöhung (8) des mindestens einen Endes der beidseitigen Schaltwelle oder des Klappenschaftes (5) größer als der Lagerdurchmesser der Lagerbuchse (6) ist und in den Mantel der Lagerbuchse (6) eingereift.

3. Scheibenventil nach Anspruch 1, **dadurch gekennzeichnet, dass** die zugehörige Lagerbuchse (6) die Erhöhung (8) aufweist, die in den Mantel des mindestens einen Endes der beidseitigen Schaltwelle oder des Klappenschaftes (5) eingreift.

4. Scheibenventil nach den vorhergehenden Ansprüchen, **dadurch gekennzeichnet, dass** die Erhöhungen als Rasterhöhungen ausgebildet und in Gegenausnehmungen einrastbar sind.

5. Scheibenventil nach den vorhergehenden Ansprüchen, **dadurch gekennzeichnet, dass** die Erhöhungen unter Vorspannung in die jeweiligen Gegen-Mantelflächen einbringbar sind.

## Claims

1. Butterfly valve being equipped with a flap disc (5) rotating in a housing (1), the disc being positively associated with a two-sided actuating shaft or a flap shaft and the guidance of which being undertaken in the area of a corresponding bearing bush (6) of the housing, **characterised by** a shaft seal (7) being arranged in the housing through which passes the actuating shaft tail of the two-sided actuating shaft or the flap shaft, pointing at the flap disc and sealing the housing (1) to the outside, so that the bearing bush (6) is supported, in direct connection with the shaft seal, by a bearing bore (4) of the housing and which receives an actuating shaft tail or the flap shaft (5) and, respectively, the corresponding bearing bush (6) being shaped with an at least partially circular increase (6) which engages with a corresponding recess (11) of the attached casing of the other part.

2. Butterfly valve according to claim 1, **characterised by** the increase (8) of at least one tail of the two-sided actuating shaft or the flap shaft (5) being larger than the bearing diameter of the bearing bush (6) and engaging with the casing of the bearing bush (6).

3. Butterfly valve according to claim 1, **characterised by** the corresponding bearing bush (6) showing the increase (8) which engages with the casing of at least one tail of the two-sided actuating shaft or the flap shaft (5).

4. Butterfly valve according to preceding claims, **characterised by** the increases being shaped as grid increases and being lockable in counter-recesses.

5. Butterfly valve according to the preceding claims, **characterised by** the feature that the increases can be inserted under pre-load into the respective surfaces of the counter-casing.

## Revendications

1. Vanne papillon étant équipée d'un disque de clapet (5) rotatif dans un corps (1), le disque étant relié à forme finale d'un arbre d'actionnement mutuel ou d'un arbre de clapet et le guidage desquels étant effectué dans les rayons d'un coussinet (6) correspondant du corps, **caractérisé par** un joint d'arbre (7) étant arrangé dans le corps, à travers duquel passe une extrémité d'arbre d'actionnement de l'arbre d'actionnement mutuel ou l'arbre de clapet, indiquant au disque de clapet et qui étanche le corps (1) à l'extérieur, de la manière que le coussinet (6) soit appuyé, en raccordement direct au joint d'arbre, dans le perçage (4) du corps (1) et prend une extrémité d'arbre d'actionnement et l'arbre de clapet, et de la manière qu'une extrémité d'arbre d'actionnement ou l'arbre de clapet (5) et, respectivement, le coussinet (6) correspondant soit formé avec une bosse (8) au moins partiellement continue qui engrène une empreinte (10) correspondante de la gaine attribuée de l'autre partie.

2. Vanne papillon selon revendication 1, **caractérisé par** la bosse (8) du moins une extrémité de l'arbre d'actionnement mutuel ou de l'arbre de clapet (5) étant plus grande que le diamètre du coussinet (6) et engrenant la gaine du coussinet (6).

3. Vanne papillon selon revendication 1, **caractérisé par** le coussinet (6) présentant la bosse (8) qui engrène la gaine du moins une extrémité de l'arbre d'actionnement mutuel ou de l'arbre de clapet (5).

4. Vanne papillon selon les revendications précédentes, **caractérisé par** les bosses étant formées comme bosses de trame et pouvant être encliqueter dans les exclusions pendantes.

5. Vanne papillon selon les revendications précédentes, **caractérisé par** les bosses pouvant être introduites sous précontrainte dans les surfaces de la gaine pendante.
